(19) Europäisches Patentamt
European Patent Office
Office européen des brevets

(11) Veröffentlichungsnummer: **0 293 750 A2**

(12) # EUROPÄISCHE PATENTANMELDUNG

(21) Anmeldenummer: **88108367.9**

(51) Int. Cl.⁴: **C08F 8/44 , C08F 2/48**

(22) Anmeldetag: **26.05.88**

(30) Priorität: **02.06.87 DE 3718447**

(43) Veröffentlichungstag der Anmeldung:
**07.12.88 Patentblatt 88/49**

(84) Benannte Vertragsstaaten:
**CH DE FR GB IT LI NL**

(71) Anmelder: **BASF Aktiengesellschaft**
**Carl-Bosch-Strasse 38**
**D-6700 Ludwigshafen(DE)**

(72) Erfinder: **Hoffmann, Gehard, Dr.**
**Pappelstrasse 22**
**D-6701 Otterstadt(DE)**
Erfinder: **Huemmer, Wolfgang, Dr.**
**Vischerstrasse 16**
**D-6703 Limburgerhof(DE)**
Erfinder: **Koch, Horst, Dr.**
**Tiefenthaler Strasse 47**
**D-6718 Gruenstadt(DE)**
Erfinder: **Littmann, Dieter, Dr.**
**Rene-Bohn-Strasse 4 a**
**D-6700 Ludwigshafen(DE)**

(54) **Polymerisat-Ammoniumsalze.**

(57) Polymerisat-Ammoniumsalze, welche von einem durch polymeranaloge Umsetzungen modifizierbaren Copolymerisat (A) und von einem oder mehreren Aminen (B) gebildet werden, wobei das Copolymerisat (A) durch Copolymerisation von Monomerengemischen aus

$a_1$) Ethylen

$a_2$) Acrylsäure und/oder Methacrylsäure und

$a_3$) einem oder mehreren weiteren Monomeren aus der Gruppe der Vinylester, Vinylether, Acrylsäureester, Methacrylsäureester, Acrylsäureamide und Methacrylsäureamide erhältlich ist

und wobei die Amine (B) aus der Gruppe der

$b_1$) cyclischen Amine der allgemeinen Formel I

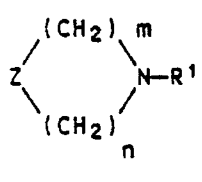

I

und/oder aus der Gruppe der

$b_2$) offenkettigen Amine der allgemeinen Formel II

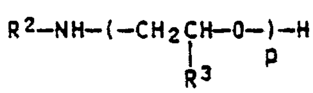

II,

EP 0 293 750 A2

und/oder aus der Gruppe

$b_3$) 1,4-Thiazin, N,N′,N″-Trisvinylmelamin und N,N′,N″-Trisallyl-melamin ausgewählt sind, wobei die Reste Z, $R^1$, $R^2$ und $R^3$ die in der Beschreibung angegebenen bedeutungen haben.

## Polymerisat-Ammoniumsalze

Die Erfindung betrifft neue Polymerisat-Ammoniumsalze, welche von einem durch polymeranaloge Umsetzungenmodifizierbaren Copolymerisat (A) und von einem oder mehreren Aminen (B) gebildet werden, wobei das Copolymerisat (A) durch Copolymerisation von Monomerengemischen erhältlich ist, die aus

$a_1$) Ethylen,

$a_2$) Acrylsäure und/oder Methacrylsäure und

$a_3$) einem oder mehreren weiteren Monomeren aus der Gruppe der Vinylester, Vinylether, Acrylsäureester, Methacrylsäureester, Acrylsäureamide und Methacrylsäureamide bestehen, für deren Gewichtsverhältnisse die folgenden Bedingungen gelten:

Gew.-Teile ($a_1$) + ($_2$) + ($a_3$) = 100,
30 Gew.-Teile $\leq$ Gew.-Teile ($a_1$) $\leq$ 70 Gew.-Teile,
5 Gew.-Teile $\leq$ Gew.-Teile ($a_2$) $\leq$ 50 Gew.-Teile
und
5 Gew.-Teile $\leq$ Gew.-Teile ($a_3$) $\leq$ 40 Gew.-Teile.

Außerdem betrifft die Erfindung durch Photopolymerisation vernetzbare Gemische, welche unter Verwendung dieser Polymerisat-Ammoniumsalze hergestellt werden.

In der EP-A-0 198 392 wird vorgeschlagen, die Lagerfähigkeit und die Verarbeitungseigenschaften eines wäßrig entwickelbaren Photoresists auf der Grundlage eines wäßrig verarbeitbaren, Carbonsäuregruppen enthaltenden Ethylen-Vinylacetat-Copolymerisats der Säurezahl 40 bis 160 durch partielle Neutralisation von 15 bis 55 % der Carbonsäuregruppen mit Triethylamin, Triethanolamin, 2-Amino-2-ethyl-1,3-propandiol, N,N-Diemethylanilin, N,N,N′,N′-Tetra-(2-hydroxyethyl)ethylendiamin, N,N,N′,N′-Tetramethylbutanddiamin, N,N-Diethylaminoethylacrylat, N,N-Diethylaminoelthyl-methacrylat oder N,N-Dimethylaminoethyl-acrylat zu verbessern. Hierdurch soll vor allem erreicht werden, daß der durch Photopolymerisation vernetzbare Photoresist nach dem Auftragen auf eine Trägerfolie ohne Beschädigung zu einer Rolle gewickelt und für den Gebrauch wieder rasch von der Trägerfolie getrennt werden kann.

In der EP-A-0 200 463 wird vorgeschlagen, die Viskosität eines Beschichtungsmittels aus einem organischen Lösungsmittel, einem darin gelösten photopolymerisierbaren Gemisch auf der Grundlage Carbonsäuregruppen enthaltender Bindemittel und einem einen Thixotropie-Effekt erzeugenden Füllstoff durch die Zugabe spezieller Amine zu erniedrigen. Hierbei kommen als Bindemittel Acryl- oder Methacrylsäurepolymerisate oder deren Copolymerisate mit Acrylsäureestern, Vinylethern, Vinylacetat oder dessen Verseifungsprodukten, Styrol, Vinylpyrrolidon oder Butadien; oder Polyacrylsäureanhydride; oder Copolymerisate von Maleinsäureanhydrid, Maleinsäuresemiestern oder -amiden oder von Anhydriden oder Derivaten der Itaconsäure mit Styrol, Vinylethern oder Vinylacetat in Betracht. Als Amine können dabei u.a. Tris-(2-aminoethyl)amin, Tris-(2-hydroxyethyl)amin, N-(2-Hydroxyethyl)amin, N,N-Bis-(2-hydroxyethyl)amin, N-(2-Hydroxyethyl)N,N-dimethylamin, N,N-Bis-(2-hydroxyethyl)-N-methylamin, 1-Amino-3-hydroxypropan oder Piperazin verwendet werden. Sinn dieser Maßnahme ist es, den Gehalt des Füllstoffs in dem Beschichtungsmittel zu erhöhen, ohne daß dabei eine unerwünschte Erhöhung der Viskosität eintritt.

Außerdem werden Polymerisat-Ammoniumsalze aus Copolymerisaten (A) und den Aminen Ethylendi-, Diethylentri-, N-Methyl-N-ethyl-ethylendi-, N,N-Dimethyl-ethylendi-, N,N′-Diethylethylendi-, N,N,N′ , N′-Tetramethylethylendi-, N,N,N″N″-Tetramethylethylentri-, Propan-1,3-diyl-di-, oder Butan-1,4-diyl-diamin sowie Pyrazin, Polyvinylpyridin oder Hydrazin in der europäischen Patentanmeldung Nr. 86114916.9 beschrieben.

Die entsprechenden Ammoniumsalze von polymerananlog modifizierten Copolymerisaten (A), inclusive diejenigen mit Ammoniak, werden in der europäischen Patentanmeldung Nr 87100994.0 beschrieben. Diese Polymerisat-Ammoniumsalze werden von Copolymerisaten (A) gebildet, welche durch polymeranaloge Umsetzungen eingeführte, seitenständige, olefinisch ungesättigte Reste (C) und/oder seitenständige, polare Gruppe aufweisende Reste (D) enthalten.

Die in den europäischen Patentanmeldungen Nr. 86114916.9 und Nr. 87100994.0 beschriebenen Polymerisat-Ammoniumsalze haben an und für sich gute anwendungstechnische Eigenschaften und eignen sich für die Herstellung leicht handhabbarer, stabiler, lagerfähiger, photopolymerisierbarer Gemische, welche zu photopolymeriserten Massen, Druckplatten, Reliefplatten oder Photoresists weiterverarbeitet werden könnon. Die daraus hergestellten, photopolymerisierten Massen, Druckplatten, Reliefplatten oder Photoresists sind thermostabil, ozonrißbeständig, abriebfest und beständig gegenüber Druckfarbenlösungsmitteln. Dennoch müssen die bisher beschriebenen Polymerisat-Ammoniumsalze weiter entwickelt werden,

um den ständig wachsenden Ansprüchen der Praxis an photopolymerisierbare Massen, Druckplatten, Reliefplatten und Photoreisists zu genügen.

Der vorliegenden Erfindung lag die Aufgabe zugrunde, die bisher beschriebenen Polymerisat-Ammoniumsalze weiter zu entwickeln, um neue, in ihren anwendungstechnischen Eigenschaften verbesserte Polymerisat-Ammoniumsalze zu erhalten, welche die Herstellung neuer, den gestiegenen Anforderungen der Praxis genügender, photopolymerisierbarer Massen, Druckplatten, Reliefplatten und Photoresists sowie der entsprechenden, photopolymerisierten Massen, Druckplatten, Reliefplatten und Photoresists ermöglichen.

Diese Aufgabe wird erfindungsgemäß durch neue Polymerisat-Ammoniumsalze gelöst, welche von einem durch polymeranaloge Umsetzung modifizierbaren Copolymerisat (A) und von einem oder mehreren Aminen (B) gebildet werden, wobei das Copolymerisat (A) durch Copolymerisation von Monomerengemischen erhältlich ist, die aus

$a_1$) Ethylen,

$a_2$) Acrylsäure und/oder Methacrylsäure und

$a_3$) einem oder mehreren weiternen Monomeren aus der Gruppe der Vinylester, Vinylether, Acrylsäureester, Methacrylsäureester, Acrylsäureamide und Methacrylsäureamide bestehen, für deren Gewichtsverhältnisse die folgenden Bedingungen gelten:

Gew.-Teile ($a_1$) + ($a_2$) + ($a_3$) = 100,
30 Gew.-Teile $\leqq$ Gew.-Teile ($a_1$) $\leqq$ 70 Gew.-Teile,
5 Gew.-Teile $\leqq$ Gew.-Teile ($a_2$) $\leqq$ 50 Gew.-Teile
und
5 Gew.-Teile $\leqq$ Gew.-Teile ($a_3$) $\leqq$ 40 Gew.-Teile

und wobei die neuen Polymerisat-Ammoniumsalze dadurch gekennzeichnet sind, daß die Amine (B) aus der Gruppe der

$b_1$) cyclischen Aminen der allgemeinen Formel I

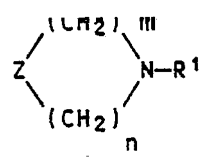

I

worin
$R^1$ ein Wasserstoffatom, eine $C_1$- bis $C_6$-Alkylgruppe, eine ω-Hydroxy-$C_1$- bis $C_6$-Alkylgruppe oder eine ω-Hydroxy-polyalkylenoxid-α-yl-Gruppe,
Z eine Sauerstoff- oder Schwefelatom oder eine NH-Gruppe oder eine $C_1$- bis $C_5$-Alkylidengruppe
n eine ganze Zahl von 1 bis 4 und
m eine ganze Zahl von 1 bis 4
bedeuten,
und/oder aus der Gruppe der

$b_2$) offenkettigen Amine der allgemeinen Formel II

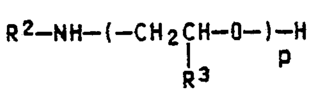

II.

worin
$R^2$ eine $C_1$- bis $C_5$-Alkylgruppe, eine Phenylgruppe, eine Hydroxy-, ω-Amino- oder ω-thiolo-$C_2$- bis -$C_{10}$-Alkylgruppe oder eine ω-Hydroxy-polyalkylenoxid-, ω-amino-polyalkylenimin- oder ω-Thiolo-polyalkylensulfid-α-yl-Gruppe,
$R^3$ ein Wasserstoffatom oder eine $C_1$- bis $C_5$-Alkylgruppe und
p eine ganze Zahl von 1 bis 10
bedeuten,
und/oder aus der Gruppe

$b_3$) 1,4-Thiazin, N,N',N''-Trisvinylmelamin und N,N',N''-Trisallylmelamin ausgewählt sind.

Die erfindungsgemäßen Polymerisat-Ammoniumsalze sind fest, kautschukelastisch und nicht klebrig und zeichnen sich durch eine vorzügliche Löslichkeit oder Dispergierbarkeit in üblichen Lösungsmitteln, insbesondere aber in Wasser, asu. Sie können nach der Zugabe geeigneter Zusatzstoffe photopolymerisiert werden, wobei sie sich durch eine besonders gute Verträglichkeit mit diesen Zusatzstoffen auszeichnen. Diese besonders gute Verträglichkeit geht über die der bekannten Polymerisat-Ammoniumsalze hinaus.

Die neuen photopolymerisierbaren Massen, Druckplatten, Reliefplatten und Photoresists auf der Grundlage der erfindungsgemäßen Polymerisat-Ammoniumsalze sind elastischer, dimensionsstabiler und längere Zeit lagerfähig als die entsprechenden bekannten Materialien. Die neuen photopolymerisierbaren Massen, Druckplatten, Reliefplatten und Photoresists auf der Grundlage der erfindungsgemäßen Polymerisat-Ammoniumsalze sind hoch kautschukelastisch, thermostabil, ozonrißbeständig, besonders abriebfest und nicht klebrig, wobei sie darüber hinaus auch noch eine besonders hohe Reißdehnung aufweisen. Überdies können die neuven Druckplatten, Reliefplatten und Photoresits nach ihrer bildmäßigen Belichtung mit aktinischem Licht unter praxisgerechten Bedingungen ohne Materialschädigung rasch mit Wasser entwickelt werden.

Im Rahmen der vorliegenden Erfindung werden Stoffe dann als "verträglich" bezeichnet, wenn sie in der Lage sind, ineinander dispergiert zu bleiben. Der Begriff "Massen" bezeichnet Klebmassen oder Dichtungsmassen.

Durch polymeranaloge Umsetzungen modifizierbare Copolymerisate (A) aus

$a_1$) Ethylen,

$a_2$) Acrylsäure und/oder Methacrylsäure und

$a_3$) mindestens einem weiteren Monomeren aus der Gruppe der Vinylester, Vinylether, Acrylsäureester, methacrylsäureester, Acrylsäureamide und Methacrylsäureamide, wie sie den erfindungsgemäßen neuen Polymerisat-Ammoniumsalzen zugrunde liegen, sind an sich bekannt.

Ihre Darstellung kann z.B. nach der LDPE (= low density polyethylene)-Hochdruckpolymerisations-Methode bei Temperaturen von 200 bis 400 °C und einem Druck von mehr als 800 $kg/cm^2$ erfollgen [ s. z.B. DE-C 23 41 462 und US-A 3 264 272].

Als Comonomere ($a_3$) geeignete Vinylester sind insbesondere solche der allgemeinen Formel V

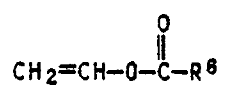

V,

worin $R^6$ einen Alkyl- oder Clycloalkylrest mit 1 bis 10 C-Atomen bedeutet, z.B. Vinylacetat, Vinylpropionat, Vinylbutyrat, Valeriansäurevinylester oder Hexancarbonsäurevinylester. Bevorzugt ist Vinylacetat.

Als Comonomere ($a_3$) geeignete Vinylether sind insbesondere solche der allgemeinen Formel VI

$CH_2 = CH\text{-}OR^6$ VI,

worin $R^6$ die oben angebene Bedeutung hat, z.B. Vinylethylether, Vinyl-1-propylether, Vinyl-2-propylether, vinyl-1-butylether, Vinyl-2-butylether oder Vinyl-1-pentylether. Bevorzugt ist Vinyl-1-butylether.

Als Comonomere ($a_3$) geeignete Acrylsäureester, Methacrylsäureester, Acrylsäureamide und Methacrylsäureamide sind insbesondere solche der alllgemeinen Formel VII

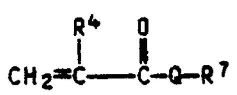

VII,

worin $R^4$ die zu Formel III angegebene Bedeutung besitzt und worin $R^7$ einen Alkyl- oder Clycloalkylrest mit 1 bis 10 C-Atomen oder einen ω-Methyl-poly(alkylenoxid)-α-oxyl-Rest darstellt und Q ein Sauerstoffatom oder eine $NR^8$-gruppe mit $R^8$ = H oder $C_1$-$C_4$-Alkyl bezeichnet. Beispiele geeigneter Acrylsäureester, Methacrylsäureester, Acrylsäureamide und Methacrylsäureamide sind Methylacrylat, Methylmethacrylat, Ethylacrylat, Ethylmethacrylat, Propylacrylat, Propylmethacrylat, n-Butylacrylat, n-Butylmethacrylat, n-Pentylacrylat, n-Pentylmethacrylat, n-Hexylacrylat, n-Hexylmethacrylat, tert-Butylacrylat, Cyclohexylacrylat, Cyclohexylmethacrylat, 2-Ethylhexylacrylat, 2-Ethylhexylmethacrylat, Dicyclopentadienylacrylat, ω-Methyl-poly-(ethylenoxid)-α-yl-(meth)acrylat, ω-Methyl-poly(propylen-1,2-oxid)-α-yl-(meth)acrylat, ω-Methyl-poly-(propylen-1,3-oxid)-α-yl-(meth)acrylat, N-Methyl-N-butylmethacrylamid oder N-Ethyl-N-(2-ethylhexyl)-acrylamid. Bevorzugt sind n-Butylacrylat, 2-Ethylhexylacrylat, ω-Methyl-poly(ethylenoxid)-α-yl-acrylat und Dicyclopentadienylacrylat, von denen wiederum die ersten drei besonders bevorzugt sind.

Bevorzugte Copolymerisate (A) sind Ethylen-(Meth)Acrylsäure-Copolymerisate, die n-Butylacrylat, 2-Ethylhexylacrylat und/oder ω-Methyl-poly(ethylenoxid)-α-yl-acrylat als Comonomere ($a_3$) einpoly merisiert enthalten. Vorteilhafte Copolymerisate (A) haben im allgemeinen eine Shore A-Härte von über 10 und insbesondere von 15 bis 75.

Die Copolymerisate (A) der erfindungsgemäßen Polymer-Ammoniumsalze können durch polymeranaloge Umsetzung eingeführte, seitenständige, olefinisch ungesättigte Reste (C) der allgemeinen Formel III enthalten

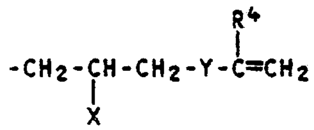

III,

worin

X eine Hydroxy-, eine Amino- oder eine Thiolgruppe,

Y eine Ester, eine Amin-, eine Ether- oder eine $C_1$- bis $C_{10}$-Alkandiylgruppe und

$R^4$ ein Wasserstoffatom oder eine Methylgruppe bezeichnet.

Beispiele geeigneter seitenständiger, olefinisch ungesättigter Reste (C) sind die 2-Hydroxy-5-oxo-4-oxahept-6-en-1-yl-, 2-Amino-5-oxo-4-oxahept-6-en-1-yl, 2-Thiolo-5-oxo-4-oxahept-6-en-1-yl-, 2-Hydroxy-5-oxo-4-oxa-6-methylhept-6-en-1-yl-, 2-Amino-5-oxo-4-oxa-6-methylhept-6-en-1-yl-, 2-Hydroxy-5-oxo-4-azahept-6-en-1-yl-, 2-Amino-5-oxo-4-azahept-6-en-1-yl-, 2-Thiolo-5-oxo-5-azahept-6-en-1-yl-, 2-Hydroxy-5-oxo-4-aza-6-methylhept-6-en-1-yl-, 2-Hydroxy-5,10-dioxo-4,9-dioxa-6-aza-11-methyl-dodec-11-en-1-yl-, 2-Amino-5-oxo-4-aza-6-methylhept-6-en-1-yl-, 2-Thiolo-5-oxo-4-aza-6-methylhept-6-en-1-yl-, 2-Hydroxy-4-oxahex-5-en-1-yl, 2-amino-4-oxahex-5-en-1-yl-, 2-thiolo-4-oxahex-5-en-1-yl-, 2-Hydroxy-hex-5-en-1-yl, 2-Amino-hex-5-en-1-yl-, 2-Thiolo-hex-5-en-1-yl-, 2-Hydroxy-hept-6-en-1-yl-, 2-Amino-hept-6-en-1-yl- oder 2-Thiolo-hept-6-en-1-yl-Reste. Bevorzugt ist der 2-Hydroxy-5-oxo-4-oxa-6-methyl-hept-6-en-1-yl-Rest VIII

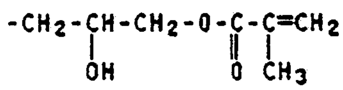

VIII.

Außerdem können die Copolymerisate (A) der erfindungsgemäßen Polymerisat-Ammoniumsalze zusätzlich zu den Resten (C) oder anstelle von diesen durch polymeranaloge Umsetzung eingeführte, seitenständige Reste (D) der allgemeinen Formel IV enthalten,

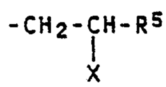

IV

worin $R^5$ eine polare Gruppe, ein Wasserstoffatom oder eine weitere Gruppe X bedeutet und X die bei Formel III angegebene Bedeutung besitzt.

Unter polaren Gruppen werden solche Gruppen verstanden, welche zur Dipol-Dipol-, Dipol-Ion- oder Ion-Ion-Wechselwirkung befähigt sind.

Beispiele geeigneter Reste (D) sind 2-Hydroxy-eth-1-yl-, 2-Amino-eth-1-yl-, 2-Thiolo-eth-1-yl-, 2,3-Dihydroxy-prop-1-yl-, 2-Amino-3-hydroxy-prop-1-yl, 2-Thiolo-3-hydroxy-prop-1-yl- oder 2-Hydroxy-2-[ω-alkyl-poly(ethylenoxid)-α-yl]-eth-1-yl-Reste.

In einer bevorzugten Verfahrensweise erfolgt die Einführung der Reste (C) und/oder der Reste (D) in die Copolymerisate (A) durch partielle Umsetzung der Carbonsäuregruppen in den Copolymerisaten (A) mit geeigneten Oxiran-2-yl-, Thiiran-2-yl- und Aziridin-2-yl-Verbindungen. Um in den Endprodukten noch freie Carbonsäuregruppen für die Ammoniumsalzbildung zur Verfügung zu haben, ist es notwendig, insgesamt nur einen Teil der Carbonsäuregruppen bei der Einführung der Reste (C) und/oder (D) reagieren zu lassen. So ist es von Vorteil, nicht mehr als 50 Mol.-% der im Copolymerisat (A) vorhandenen Carbonsäuregruppen in dieser Weise umzusetzen.

Die Umsetzung von Carbonsäuregruppen enthaltenden Verbindungen mit Oxiran-2-yl-, Thiiran-2-yl-

oder Aziridin-2-yl-Verbindungen unter Ringöffnung und Bildung eines α-thiol- und α-Amino-Esters ist an sich bekannt und wird beispielsweise in der Firmenschrift "Reactive Monomers", Nissan Blemmer G, High Polymer Modifiers (Nippon Oil and Fats, Co. Ltd.) aus dem Jahr 1968 beschrieben. Ferner ist es bekannt, daß anstelle von Oxiran-2-yl-Verbindungen auch Glycidyl-Verbindungen eingesetzt werden können. In einer bevorzugten Verfahrensweise setzt man die Copolymerisate (A) mit diesen Verbindungen in Lösungsmitteln wie Tetrahydro furan, Toluol, Ethylbenzol, Methylethylketon, Methylisobutylketon oder Gemischen aus denselben um. Zu den Lösungen der Copolymerisate (A) fügt man gegebenenfalls p-Dimethylaminopyridin oder N-Methylimidazol als Katalysator und z.B. 2,6-Di-tert.-butyl-p-kresol oder N-Nitrosodiphenylamin als Inhibitor zu. Zu diesen Lösungen tropft man die gewünschte Menge an Oxiran-2-yl- bzw. Glycidyl-, Thiiran-2-yl- oder Aziridin-2-yl-Verbindung mit einer solchen Geschwindigkeit, daß die Temperatur des Reaktionsgemisches bei 40 bis 110 °C liegt. Gegebenenfalls wird die Temperatur durch Heizen oder Kühlen eingestellt. Nach dem Zutropfen wird die Reaktionsmischung 3 bis 10 Stunden lang bei 50 °C nachgerührt und das Lösungsmittel in geeigneter Weise, beispielsweise durch Vakuumdestillation, entfernt. In einer weiteren vorteilhaften Verfahrensweise setzt man das Copolymerisat (A) zusammen mit den vorstehend genannten Verbindungen auf einem Kneter um, z.B. bei 125 bis 180 °C während 3 bis 60 Minuten, oder man führt die Reaktion in einem Zweischneckenextruder mit einer Verweilzeit von 5 bis 10 Minuten durch.

Geeignete Verbindungen für die Umsetzung zur Einführung der Reste (C) sind z.B. Oxiran-2-methylacrylat, Oxiran-2-methylolmethacrylat, Glycidylacrylat, Glycidylmethacrylat, 2-(3,8-Dioxo-2,7-dioxa-4-aza-9-methyl-dec-9-en-1-yl)oxiran, Aziridin-2-methylolacrylat, Aziridin-2-methylolmethacrylat, Thiiran-2-methylolmethacrylat, N-(2-Oxiranyl)methylacrylamid, N-(2-Oxiranyl)methylmethacrylamid, N-(2,3-Dihydroxy-1-propyl)methacrylamid, N-(2-Aziridinyl)methylacrylamid, N-(2-Aziridinyl)methylmethacrylamid, N-(2-Thiiranyl)-methylacrylamid, N-(2-Thiiranyl)-methylmethacrylamid, 1-(Oxiran-2-yl)-2-oxabuten-3, Glycidylmonovinylether, 1-(Aziridin-2-yl)-2-oxabuten-3, 1-(Thiiran-2-yl)-2-oxabuten-3, 4-(Oxiran-2-yl)-buten-1, 5,6-Dihydroxyhexen-1, 5-(Oxiran-2-yl)-penten-1, 6,7-Dihydroxypenten-1, 4-(Aziridin-2-yl)-buten-1, 5-(Aziridin-2-yl)-penten-1, 4-(Thiiran-2-yl)-buten-1 oder 5-(thiiran-2-yl)-penten-1. Bevorzugt sind Glycidylmethacrylat und Oxiran-2-methylolmethacrylat.

Für die Umsetzung zur Einführung von Resten (D) sind z.B. Oxiran, Aziridin, Thiiran, 2-Methyloloxiran, 2-Methylolaziridin, 2-Methylolthiiran oder 2-[ω-Methyl-poly(ethylenoxid)-α-yl]-oxiran geeignet.

Beispiele bevorzugter cyclischer Amine ($b_1$) der allgemeinen Formel I, welche für die Bildung der erfindungsgemäßen Polymerisat-Ammoniumsalze verwendet werden, sind Morpholin, Piperazin, Imidazolidin, Piperidin, 1,3-Thiaazolidin, Perhydro-1,4-thiazin, N-Ethylmorpholin, N-Methylpiperazin, N-Ethylpiperazin, N-Propylimidazolidin, N-Hexyl-1,3-thiaazolidin, N-(2-Hydroxyethyl)piperazin, N-(3-Hydroxy-n-propyl)-piperazin, N-(6-Hydroxy-n-hexyl)piperazin, N-[ω-Hydroxy-poly(ethylenoxid)α-yl]piperazin oder N-[ω-Hydroxy-poly(propylenoxid)α-yl]piperazin, von denen Piperazin, Morpholin, N-Ethylpiperazin und N-(2-Hydroxyethyl)-piperazin besonders bevorzugt sind.

Beispiele bevorzugter offenkettiger Amine ($b_2$) der allgemeinen Formel II, welche für die Bildung der erfindungsgemäßen Polymerisat-Ammoniumsalze verwendet werden, sind N-Methyl-N-(2-hydroxyethyl)-amin, N-Ethyl-N-(2-hydroxyethyl)amin, N-Propyl-N-(2-hydroxyethyl)amin, N-Butyl-N-(2-hydroxyethyl)amin, N-Pentyl-N-(2-hydroxyethyl)amin, N-Phenyl-(2-hydroxyethyl)amin, N-Methyl-N-(2-hydroxypropyl)amin, N,N-Bis-(2-hydroxypropyl)amin, N-Propyl-N-(5-hydroxy-3-oxapentyl)amin, N-Propyl-N-(8-hydroxy-3,6-dioxaoctyl)-amin, N-Propyl-N-(18-hydroxy-3,6,9,12,15-pentaoxaoctadecyl)amin, N,N-Bis-(2-hydroxyethyl)amin, N-(2-Hydroxyethyl)ethylendiamin, N-(2-Hydroxyethyl)-N-(5-hydroxy-pentyl)amin, N-(5-Hydroxy-3-oxapentyl)-trimethylendiamin, N-(2-Hydroxyethyl)-N-(4-hydroxy-butyl)amin, N-(2-Hydroxyethyl)-N-[ω-hydroxy-poly-(ethylenoxid)-α-yl]amin, in welchem der mittlere Polymerisationsgrad $\overline{P}$ der Polyalkylenoxidkette 15 ist, N,N-Bis-[ω-hydroxy-poly(ethylenoxid)-α-yl]amin, in welchem $\overline{P}$ der Polyalkylenoxidkette 10 ist, N-(2-Hydroxyethyl)-N-[ω-amino-poly(ethylenimin)-α-yl]amin, in welchem $\overline{P}$ der Polyalkyleniminkette 15 bis 20 ist, N-[ω-Hydroxy-poly(ethylenoxid)-α-yl]-N-[ω-amino-poly(ethylenimin)-α-yl]amin, in welchem $\overline{P}$ der Polyalkylenoxidkette 6 bis 10 und $\overline{P}$ der Polyalkyleniminkette 7 bis 15 ist, oder N-(2-Hydroxyethyl)-N-[ω-thiolo-poly-(ethylensulfid)-α-yl]amin, in welchem $\overline{P}$ der Polyalkylensulfidkette 6 bis 12 ist. Von diesen sind N,N-Bis[2-hydroxyethyl)amin [=Diethanolamin], N-Methyl-N-(2-hydroxyethyl)amin, N-Propyl-N-(2-hydroxyethyl)amin, N-Butyl-N-(2-hedroxyethyl)amin, N-Phenyl-N-(2-hydroxyethyl)amin, N-Methyl-N-(2-hydroxypropyl)amin, N,N-Bis-(2-hydroxypropyl)amin, N-Propyl-N-(5-hydroxy-3-oxapentyl)amin besonders bevorzugt.

Amine ($b_3$) sind 1,4.Thiazin, N,N′,N″-Trisvinylmelamin und N,N,N″-trisallylmelamin, von denen die ersten beiden bevorzugt sind.

Die Menge der Amine (B), welche dem Copolymerisat (A) zur Bildung der Salze zugesetzt wird, richtet sich in erster Linie nach der Anzahl der freien Carbonsäuregruppen im Copolymerisat (A). Diese Anzahl kann leicht in üblicher und bekannter Weise durch Säure-Base-Titration ermittelt werden. Im allgemeinen wird die Anzahl der freien Carbonsäuregruppen als "Säurezahl" bezeichnet. Das ist diejenige Menge an

Kalilauge in mg, welche notwendig ist, um 1 g des Copolymerisats (A) zu neutralisieren.

In den erfindungsgemäßen Polymerisat-Ammoniumsalzen können alle, d.h. 100 Mol.-% der freien Carbonsäuregruppen in den Copolymerisaten (A), mit den Aminen (B) umgesetzt sein. Es kann indes von Vorteil sein, wenn weniger als 100 Mol.-% neutralisiert sind. Der Neutralisationsgrad sollte aber 10 Mol.-%, vorteilhafter 20 Mol.-% und insbesondere 30 Mol.-% nicht unterschreiten.

Die Herstelung der erfindungsgemäßen Polymerisat-Ammoniumsalze kann durch Zusammengeben der gewünschten Menge der Komponenten (A) und (B) in Lösung oder in Substanz erfolgen, wobei die üblichen und bekannten Misch-, Knet-und Lösungstechniken angewendet werden.

Die erfindungsgemäßen Polymerisat-Ammoniumsalze werden mit Vorteil für die Herstellung von photopolymerisierbaren vernetzbaren Druckplatten, Reliefplatten und Photoresists verwendet. Dazu werden ihnen geeignete verträgliche Photoinitiatoren in wirksamen Mengen und gegebenenfalls geeignete verträgliche photopolymerisierbare Monomere, Weichmacher, Inhibitoren der thermisch initiierten Polymerisation, Farbstoffe und Pigmente, Mittel zur Verbesserung der Reliefstruktur, Vernetzungshilfsmittel, Antioxidantien, Füllstoffe, Flußmittel oder Formtrennmittel beigegeben. Mischungen aus den erfindungsgemäßen Polymerisat-Ammoniumsalzen und diesen Zusatzstoffen werden im folgenden der Kürze halber als "Gemische" bezeichnet.

Beispiele geeigneter verträglicher Photoinitiatoren sind Benzoin oder Benzoinderivate, wie dessen Methyl-, Isopropyl-, n-Butyl-oder Isobutylether; symmetrisch oder unsymmetrisch substituierte Benzilacetale, wie Benzildimethylacetal, Benzil-1-methyl-1-ethyl-acetal; oder Acylarylphosphinoxide wie 2-Dimethoxibenzoyl-diphenylphosphinoxid, 2,4,6-Trimethylbenzoyl-diphenylphosphinoxid, 2,4,6-Trimethylbenzoyl-phenylphosphinsäureethylester oder 2,4,6-Trimethylbenzoyl-phenylphosphinsäure-Natrium-Salz oder substituierte und unsubstituierte Chinone wie Ethylanthrachinon, Benzanthrachinon, Benzophenon oder 4,4′-Bis(dimethylamino)benzophenon. Sie können allein oder im Gemisch miteinander oder in Verbindung mit Coinitiatoren verwendet werden, z.B. Ethylanthrachinon mit 4,4′-Bis(dimethylamino)-benzophenon, Benzoinmethylether mit Triphenylphosphin, Diacylphosphinoxide mit tertiären Aminen oder Acylarylphosphinoxide mit benzildimethylacetal. In den Gemischen werden sie in einer Menge von 0,001 bis 10, vorteilhafterweise 0,1 bis 5 und insbesondere 0,3 bis 2 Gew.-%, bezogen auf das Gemisch, verwendet, wobei die Menge mitbestimmt wird von der Mitverwendung photopolymerisierbarer Monomerer.

Geeignete verträgliche photopolymerisierbare Monomere besitzen im allgemeinen einen Siedepunkt von über 100 °C bei Atmosphärendruck und ein Molgewicht von bis zu 3000, insbesondere von bis zu 2000. Geeignet sind z.B. die Ester der Acrylsäure und/oder Methacrylsäure mit ein- oder mehrwertigen Alkoholen wie Butylacrylat, Butylmethacrylat, 2-Ethylhexylacrylat, Lauryl(meth)acrylat, Ethylenglykol-di-(meth)acrylat, Butandiol-1,4-di(meth)acrylat, Neopentylglykol-di(meth)acrylat, 3-Methylenpentandiol-di(meth)-acrylat, 2-Hydroxypropyl(meth)acrylat, 2-Hydroxyethyl(meth)acrylat, 1,6-Hexandiol-di(meth)acrylat, 1,1,1,-Trimethylolpropan-tri(meth)acrylat, Di-, Tri- und Tetraethylenglykol-di(meth)acrylat, Triporpylenglykol-di-(meth)acrylat oder Pentaerythrit-tetra(meth)acrylat, Poly(ethylenoxid)-di-(meth)acrylat, ω-Methyl-poly-(ethylenoxid)-α-yl-(meth)acrylat, N,N-Diethylaminoethylacrylat oder ein Umsetzungsprodukt aus 1 Mol Glycerin, 1 Mol Epichlorhydrin und 3 Mol Acrylsäure; die Vinylester aliphatischer Monocarbonsäuren, wie Vinyloleat; die Vinylether von Alkoholen, wie Octadecylvinylether und Butandiol-1,4-divinylether; die Diester von Fumar- und Maleinsäure; oder die Umsetzungsprodukte aus OH-terminierten, oligomeren Polybutadienen mit Maleinsäure oder (Meth)Acrylsäure, d.h. oligomere Polybutadiene mit aktivierten, photopolymerisierbaren olefinischen Doppelbindungen. In den Gemischen werden sie - einzeln oder als Mischung - in einer Menge von 1 bis 40, vorteilhafterweise 3 bis 30 und insbesondere 5 bis 20 Gew.-%, bezogen auf ein Gemisch, verwendet.

Beispiele geeigneter verträglicher Weichmacher sind modifizierte und unmodifizierte Naturöle und -harze, wie paraffinische oder naphthenische Öle, sowie Erdölharze oder Pentaerythritolester von hydriertem Kollophonium; Alkyl-, Alkenyl-, Arylalkyl- oder Arylalkenylalkoholester von Säuren wie Zitronensäure, Essigsäure, Propionsäure, Buttersäure, Ethylbuttersäure, Ethylhexansäure, Glykolsäure, Bensoesäure, Phthalsäure, Trimellitsäure, Abietinsäure, Phosphorsäure oder Stearinsäure; synthetische Oligomere oder harze wie Oligostyrol, oligomere Styrol-Butadien-Copolymerisate, Oligo-α-methylstyrol, oligomere α-Methylstyrol-Vinyltoluol-Copolymerisate, flüssige 1,2- oder 1,4-Oligobutadiene, Oligopentadiene, flüssige oligomere Acrylnitril-Butadien-Copolymerisate sowie Polyterpen-, Polyacrylat-, Polyester- oder Polyurethanharze, synthetische Polymere wie Polyethylen oder Ethylen-Propylen-Dien-Kautschuke; ω-Methyl-oligo-(ethylenoxid); oder Sulfonamide. Von Vorteil sind Mengen von 1 bis 25 Gew.-%, bezogen auf das Gemisch.

Geeignete verträgliche Inhibitoren der thermisch initiierten Polymerisation werden im allgemeinen in einer Menge von 0,001 bis 2 Gew.-%, bezogen auf das Gemisch, sugesetzt und weisen keine nennenswerte Eigenabsorption in dem aktinischen Bereich auf, in dem der Photoinitiator absorbiert. Beispiele geeigneter Inhibitoren sind Hydrochinon, p-Methoxyphenol, 2,6-Di-tert.-butyl-p-kresol, β-Naphthol, Phenothiazin, Pyridin, Nitrobenzol, m-Dinitrobenzol oder Chloranil; Tlhiazinfarbstoffe, wie Thioninblau G (C.I. 52025), Methylenblau B (C.I. 52015) oder Toluidinblau (C.I. 52040); oder N-Nitrosamine, wie N-Nitrosodiphenylamin, oder die Salze, beispielsweise die Kalium, Calcium- oder Aluminiumsalze, des N-Nitrosocyclohexylhydroxylamins.

Geeignete verträgliche Farbstoffe, Pigmente oder photochrome Zusätze können den Gemischen in einer Menge von 0,0001 bis 2 Gew.-%, bezogen auf das Gemisch, zugesetzt werden. Sie dienen der Steuerung der Belichtungseigenschaften, der Identifizierung, der direkten Kontrolle des Belichtungsergebnisses oder ästhetischen Zwecken. Voraussetzung für die Auswahl und die Menge solcher Zusätze ist, daß sie - ebenso wie die Inhibitoren der thermisch initiierten Polymerisation - die Photopolymerisation der Gemische nicht stören. Geeignet sind z.B. die löslichen Phenazinium-, Phenoxazinium-, Acridinium- und Phenothiazinium-Farbstoffe. Diese Farbstoffe werden auch zusammen mit einer hinreichenden Menge eines Reduktionsmittels verwendet, welches den Farbstoff in Abwesenheit von aktinischem Licht nicht reduziert, bei Belichtung jedoch den Farbstoff im angeregten Elektronenzustand reduzieren kann. Beispiele solcher milden Reduktionsmittel sind Ascorbinsäure, anethol, thioharnstoff, z.B. Diethylallylthioharnstoff, insbesondere N-allylthioharnstoff, sowie Hydroxylaminderivate, insbesondere Salze des N-Nitrosocyclohexyl-hydroxylamins, vorzugsweise die Kalium-, Calcium- und Aluminiumsalze. Letztere können, wie erwähnt, zugleich als Inhibitoren der thermisch initiierten Polymerisation dienen. Die reduktionsmittel werden im allgemeinen in Mengen von 0,005 bis 5 Gew.-%, bezogen auf das Gemisch, zugesetzt, wobei sich in vielen Fällen der Zusatz eines 3- bis 10fachen der menge an mitverwendetem Farbstoff bewährt hat.

Beispiele geeigneter verträglicher Mittel zur Verbesserung der Reliefstruktur der aus den Gemischen hergestellten Druckformen sind beispielsweise 9,9′-Dianthronyl und 10,10′-Bisanthron.

Die Gemische können ferner Vernetzungshilfsmittel, wie übliche und bekannte tri- und tetrafunktionelle Thiolverbindungen, enthalten.

Zum Schutz der Gemische vor oxidativem und thermooxidativem Abbau durch Luftsauerstoff können ihnen wirksame Mengen an geeigneten verträglichen Antioxidantien zugesetzt werden, z.B. sterisch gehinderte Monophenole wie 2,6-Di-tert.-butyl-p-kresol; alkylierte Thiobis- und Alkylidenbisphenole wie 2,2′-Methylen-bis-(4-methyl-6-tert.-butylphenol) oder 2,2′-Bis-(1-hydroxy-4-methyl-6-tert.-butylphenyl)sulfid; Hydroxybenzyle wie 1,3,5-Trimethyl-2,4,6-tris-(3,5-di-tert.-butyl-4-hydroxybenzyl)benzol; Triazine wie 2-(4-Hydroxy-3,5-tert.-butylanilino)-4,6-bis-(n-octylthio)-1,3,5-triazin; polymerisiertes Trimethyldihydrochinon; Zinkdibutyldithiocarbamat; Dilaurylthiodipropionat; oder Phosphite wie Tris (nonylphenyl)phosphit. Von vorteil sind Mengen 0,001 bis 5 Gew.-%, bezogen auf ein Gemisch.

Beispiele geeigneter verträglicher, aber nicht molekulardispers einmischbarer, polymerer oder nicht polymerer organischer und anorganischer Füllstoffe oder Verstärkungsfüllstoffe sind solche, die für die Wellenlängen des zur Belichtung der erfindungsgemäßen Gemische verwendeten Lichts im wesentlichen durchlässig sind, dieses nicht streuen und in ihrem Brechungsindex weitgehend dem betreffenden Gemisch angepaßt sind, z.B. Polystyrol, organophiles Siliciumdioxid, Bentonit, Kieselsäure, organophiles Aluminiumoxid, Glaspulver, kolloidaler Kohlenstoff sowie verschiedene Arten von Farbstoffen und Pigmenten. Diese Zusatzstoffe werden in Mengen verwendet, die mit den gewünschten Eigenschaften der erfindungsgemäßen Materialien variieren. Die Füllstoffe haben den Vorteil, daß sie die Festigkeit der Gemische auf der basis der erfindungsgemäßen Polymerisat-Ammoniumsalze verbessern, die Klebrigkeit verringern helfen und unter Umständen als farbgebende Mittel wirksam sind.

Die Gemische können ferne noch geeignete Flußmittel, wie Calciumstearat, und/oder Formtrennmittel, wie Talkum, in wirksamen Mengen enthalten.

Für die Verwendung der Gemische als photopolymerisierbare Klebmassen und Dichtungsmassen empfiehlt es sich, klebrigmachende Harze, z.B. Paraffinharze, Kollophoniumester, Polyterpene oder Cumaron-Inden-harze, zuzusetzen.

Der Anteil der gegebenenfalls angewendeten Zusatzstoffe soll im allgemeinen 50, insbesondere 40 Gew.-%, bezogen auf das gemisch, nicht überschreiten.

Bei der Herstellung der Gemische aus den Komponenten können die üblichen Knet-, Misch- und Lösungstechniken angewandt werden.

Die so erhaltenen Gemische können direkt als photovernetzbare Klebmassen und Dichtungsmassen verwendet oder zu photopolymerisierbaren Druckplatten, Reliefplatten und Photoresists weiterverarbeitet werden. Dazu werden sie in üblicher Weise durch Gießen aus einer Lösung, Heißpressen, Kalandrieren oder Extrudieren zu Schichten der gewünschten Dicke geformt. Die Dicke richtet sich in erster Linie nach dem Verwendungszweck der Schichten. Sie variiert im allgemeinen von 0,0001 bis 7, insbesondere 0,025 bis 6,5 mm. Druckplatten, welche Schichten dieser Dicke aufweisen, sind für die Mehrzahl der Drucktechniken geeignet.

Die Schichten können als solche zu photopolymerisierbaren Druckplatten, Reliefplatten und Photoresists verarbeitet werden; es ist jedoch üblich, sie im Verbund mit anderen schichtförmigen Materialien herzustellen und dann erst weiterzuverarbeiten. Ein solcher Verbund wird allgemein als "Mehrschichtenelement" und die darin enthaltens Schicht aus dem Gemisch als "reliefbildenede Schicht (RS)" bezeichnet.

Üblicherweise enthält ein solches Mehrschichtenelement eine reliefbildende Schicht (RS), die mit einem dimensionsstabilen Träger (T) haftfest oder leicht ablösbar verbunden ist. Der dimensionsstabile Träger (T) wiederum kann mit einer weichelastischen Unterschicht (U) unterlegt sein. Das weiteren kann auf die dem Träger (T) abgewandte Seite der Schicht (RS) eine Deckschicht (DS) und/oder eine Deckfolie (DF) aufgebracht werden. Werden Deckschicht (DS) und Deckfolie (DF) gemeinsam verwendet, dann liegt (DS) der Schicht (RS) direkt auf, und es kann sich zwischen (DS) und (DF) noch eine antihaftschicht (AS) befinden. Ferner kann eine haftfeste Verbindung zwischen (T) und (RS) und gegebenenfalls (RS) und (DF) mit Hilfe einer Haftschicht (HS) erreicht werden.

Als dimensionsstabile Träger (T) können Platten, Folien oder konische oder zylindrische Röhren (Sleeves) aus Metallen, wie Stahl, Aluminium, Kupfer oder Nickel, oder aus Kunststoffen, wie Polyethylenterephthalat, Polybutylenterephthalat, Polyamid oder Polycarbonat, verwendet werden. Daneben kommen noch Gewebe und Vliese, z.B. Glasfasergewebe, oder Verbundmaterialien aus z.B. Glasfasern und Kunststoffen, wie Polyethylenterephthalat, in Frage.

Als Haftschichten (HS) werdenmit Vorteil übliche und bekannte, etwa 0,5 bis 40 µm dicke Haftlackschichten verwendet.

Geeignete Deckschichten (DS) sind im allgemeinen 0,5 bis 20 µm dick und können aus einem Polymeren bestehen, das lösliche, klebfreie, transparente und reißfeste Filme bildet, z.B. Polyamid, Copolyamid, Polyurethan, Polyvinylalkohol, Polyvinylpyrrolidon, Polyethylenoxid eines Molgewichts über 105 oder Cyclokautschuk mit einem hohen Cyclisierungsgrad. Gegebenenfalls kann (DS) mattiert sein.

Geeignete Deckfolien (DF) sind im allgemeinen 20 bis 150 µm dick und bestehen z.B. aus einem Polymeren wie Polyamid oder Polyethylenterephthalat.

Geeignete Antihaftschichten (AS) sind im allgemeinen 0,1 bis 0,5 µm dick und bestehen beispielsweise aus Silikonharzen.

Werden als Schichtträger (T) stark reflektierende Platten oder Folien verwendet, dann können sie geeignete Lichthofschutzmittel wie Ruß oder Mangandioxid enthalten. Die Lichthofschutzmittel können aber auch als separate Schicht auf (T) aufgetragen werden oder in den Haftschicht (HS) oder der reliefbildenden Schicht (RS) enthalten sein.

Die Herstellung solcher Mehrschichtenelemente kann durch Auftragen der reliefbildenden Schicht (RS) auf den Träger (T) mittels Gießen aus Lösung, Heißpressen, Kalandrieren oder Extrudieren erfolgen. Auf dieses Zweischichtenelement können dann die anderen Schichten in bekannter Weise aufgebracht werden. Es its aber auch möglich, die reliefbildende Schicht (RS) zuerst auf die mit einer Deckschicht (DS) bedeckten Seite einer Deckfolie (DF) aufzutragen und anschließend die unbedeckte Seite der Schicht (RS) mit dem Träger (T) haftfest oder ablösbar zu verbinden.

Aus den Schichten, die aus den Gemischen bestehen, oder aus den Mehrschichtenelementen, die reliefbildende Schichten (RS) aus den Gemischen enthalten, können durch Photopolymerisation vernetzte Druckplatten, Reliefplatten und Photoresists hergestellt werden.

Die Umwandlung von photopolymerisierbaren Druckplatten, Reliefplatten oder Photoresists in Druckplatten, Reliefplatten oder Photoresists erfolgt - gegebenenfalls nach einer Vorbehandlung - durch bildmäßiges Belichten mit aktinischem Licht einer Wellenlänge zwischen 230 und 450 nm, vorteilhafterweise zwischen 300 und 450 nm, durch auftgelegte Negativvorlagen hindurch, Auswaschen der unbelichteten und daher nicht photopolymerisierten unvernetzten Anteile der Druckplatten, Reliefplatten und Photoresists mit Hilfe von Wasser oder wäßrigen Lösungen und Trocken der so erhaltenen Platten und Photoresists, die aus einer Reliefschicht (RS') bestehen oder diese enthalten.

Geeignete Lichtquellen für aktinisches Licht sind handelsübliche UV-Fluoreszenzröhren, Quecksilbermittel-, -hoch- und -niederdruckstrahler, superaktinische Leuchtstoffröhren, Xenon-Impulslampen, mit Metalliodiden dotierte Lampen oder Kohlebogenlampen.

Die Dicke der Reliefschicht (RS') der photopolymerisierten Druckplatten, Reliefplatten und Photoresists variiert je nach Anwendungszweck von 0,001 bis 7 mm. Von Vorteil sind Dicken von 0,025 bis 6,5 mm.

Die in dieser Weise erhaltenen Druckplatten können auf Druckzylinder aufgebracht und für den Endlosdruck verwendet werden.

Die Gemische auf der Grundlage der erfindungsgemäßen Polymerisat-Ammoniumsalze weisen bei ihrer herstellung und Verarbeitung zahlreiche Vorteile auf. So lassen sie sich sehr leicht nach den üblichen Verfahren verarbeiten, wobei insbesondere ihre gute Dosierbarkeit in Krümelform das Beschicken von Extrudern erleichtert, wodurch sich im allgemeinen eine Mitverwendung von Trennmitteln erübrigt. Die

verarbeiteten photopolymerisierbaren Massen, Druckplatten, Reliefplatten und Photoresists sind klar und transparent, was vor allem erlaubt, photopolymerisierte Druckplatten, Reliefplatten und Photoresists mit Reliefschichten (RS′) von sehr hoher Relieftiefe mit gutem Flankenaufbau herzustellen. Dies ist z.B. für das Bedrucken rauher, welliger Oberfläche, z.B. von Wellpappe, Kartonagen oder Servietten, unbedingt erforderlich. Reliefhöhen von über 3 mm sind daher ohne Probleme wie bei konventionell geprägten Gummiklischees herstellbar, ohne daß es in der Tiefe der Schichten zum "Zupolymerisieren" kommt. Nicht zuletzt erlaubt die Klarheit der Gemische kurze belichtungszeiten, ohne daß dies einen nicht akzeptablen Polymerisationsgradienten in den Massen oder in den Reliefschichten (RS′) der Druckplatten, Reliefplatten und Photoresists zur Folge hätte. Die belichteten Massen, Drickplatten, Reliefplatten und Photoresists sind stabil gegenüber chemischen und physikalischen Einflüssen und sie sind nicht klebrig. Überdies können die belichteten Druckplatten, Reliefplatten und Photoresists mit Wasser entwickelt werden. Die entwickelten Materialien besitzen eine hohe Beständigkeit gegenüber Druckfarbenlösungsmitteln und eine hohe Abriebfestigkeit, was sehr hohe Druckauflagen ermöglicht. Ihre Hauptvorteile sind ihre Ozonrißbeständigkeit und ihre hervorragende Dehnbarkeit und Reißfestigkeit.

Beispiele

In den folgende Beispielen ist unter "Säurezahl" die Menge von 100 %iger KOH in mg zu verstehen, welche zur Neutralisation der in 1 g Produkt enthaltenen Carbonsäuregruppen benötigt wird. Die Reißdehnung wurde nach DIN 53 504 bestimmt. Die Neigung zur Rißbildung wurde in einer Ozonkammer bei einer Ozonkonzentration von 50 ppm und bei einer Temperature von 25 °C an 10 cm langen Proben, die einer 10 %igen Längendehnung unterworfen waren, bestimmt; das Kriterium für Ozonstabilität war hierbei, daß innerhalb von 10 Stunden keine Risse auftraten. Der "melt flow index" (MFI) wurde bei 190 °C mit einer Auflagekraft von 2,16 kp bestimmt.

Herstellung der Copolymerisate ($A_1$) und ($A_2$)

Fur die erfindungsgemäßen Beispiele wurden die Copolymerisate ($A_1$) und ($A_2$) nach der LDPE (= low density polyethylene)-Hochdruckpolymerisationsmethode hergestellt. Das für die Herstellung von ($A_1$) verwendete Monomergengemisch bestand aus:

$a_1$) 57 Gew.-% Ethylen,

$a_2$) 19 Gew.-% Acrylsäure,

$a_3$) 12 Gew.-% ω-Methyl-poly(ethylenoxid) -α-yl-acrylat (mittlerer Polymerisationsgrad $\overline{P}$ der Polyalkylenoxidkette: 15) und

$a_3$) 12 Gew.-% 2-Ethylhexylacrylat. Das für die Herstellung von ($A_2$) verwendete Monomerengemisch bestand aus:

$a_1$) 49 Gew.-% Ethylen,

$a_2$) 19 Gew.-% Acrylsäure,

$a_3$) 10 Gew.-% ω-Methyl-poly(ethylenoxid)-α-yl-acrylat $\overline{P}$ = 15) und

$a_3$) 22 Gew.-% 2-Ethylhexylacrylat. Der melt flow index (MFI) des Copolymerisats ($A_1$) lag bei 20. Seine Säurezahl wurde zu 145 ermittelt, woraus sich ein Gehalt von etwa 0,26 Mol Carbonsäuregruppen pro 100 g Copolymerisat ($A_1$) errechnet.

Der melt flow index (MFI) des Copolymerisats ($A_2$) lag bei 350. Seine Säurezahl wurde zu 146 ermittelt, woraus sich ein Gehalt von etwa 0,26 Mol Carbonsäuregruppen pro 100 g Copolymerisat ($A_2$) errechnet.

Die Herstellung des Copolymerisats ($A_3$) durch die Einführung seitenständiger Reste (C) in das Copolymerisat ($A_1$).

1000 g des Copolymerisats ($A_1$) wurden zusammenmit 630 mg p-Dimethylaminopyridin und 630 mg 2,6-Di-tert.-butyl-p-kresol in 2,2 1 trockenem Tetrahydrofuran bei 40 bis 50 °C gelöst. Zu dieser Lösung wurden innerhalb von 50 Minuten 113 g Glycidylmethacrylat zugetropft. Die resultierende Lösung wurde während 5 Stunden bei 50 °C gerührt. Nach dem Entfernen des Lösungsmittels erhielt man das transparente weichelastische Copolymerisat ($A_3$), dessen Carbonsäuregruppen zu 27 Mol.-% verestert waren. Das Copolymerisat ($A_3$) enthielt weniger als 0.1 Gew.-%, bezogen auf ($A_3$), an freiem Glycidylmethacrylat. Der Gehalt seiner freien Carbonsäuregruppen errechnete sich zu 0,19 Mol pro 100 g Produkt, was durch die Säurezahl von 106 bestätigt wurde.

Beispiel 1

Herstellung erfindungsgemäßer Polymerisat-Ammoniumsalze

Jeweils 100 g der Copolymerisate ($A_1$), ($A_2$) oder ($A_3$) wurden mit äquimolaren oder geringeren Mengen an Aminen ($b_1$), ($b_2$) und/oder ($b_3$) in trockenem Tetrahydrofuran umgesetzt. Der Begriff "äquimolar" bezieht sich dabei auf die Anzahl freier Carbonsäuregruppen in den Copolymerisaten (A) und auf die Anzahl der Aminogruppen in den Aminen (B), mit welchen die Carbonsäuregruppen zu Ammoniumsalzen umgesetzt werden. Demnach bedeutet beispielsweise die Angabe "80 Mol-% Amin (B)" diejenige Menge an Amin (B), die 80 Mol-% der Carbonsäuregruppen der Copolymerisate (A) in Ammoniumsalzgruppen umwandelt.

Die Tabelle 1 gibt Auskunft über Art und Menge der verwendeten Ausgangsstoffe und über relevante Eigenschaften der erhaltenen erfindungsgemäßen Polymerisat-Ammoniumsalze. Dabei wurde visuell beurteilt, ob eine Trübung vorlag. Die Klebrigkeit wurde mit hilfe des Tastsinns ermittelt.

Die Tabelle 1 zeigt, daß die erhaltenen geruchlosen thermoplastischen Elastomere 1-1 bis 1-25 ohne Trübung und nicht klebrig waren.

Tabelle 1: Erfindungsgemäße Polymerisat-Ammoniumsalze

| Nr. | 100 g Copolymerisat | Amin (B) ($b_1$) Mol.-% | | ($b_2$) Mol.-% | | ($b_3$) Mol.-% | Polymerisat-Ammoniumsalz Trübung | Klebrigkeit |
|---|---|---|---|---|---|---|---|---|
| 1-1 | ($A_1$) | Piperazin, | 80 | - | | - | keine | keine |
| 1-2 | ($A_1$) | Piperazin, | 50 | - | | - | " | " |
| 1-3 | ($A_1$) | Morpholin, | 100 | - | | - | " | " |
| 1-4 | ($A_1$) | Morpholin, | 30 | - | | - | " | " |
| 1-5 | ($A_1$) | N-Ethyl-piperazin, | 95 | - | | - | " | " |
| 1-6 | ($A_1$) | N-(2-Hydroxy-ethyl)piperazin, | 60 | - | | - | " | " |
| 1-7 | ($A_1$) | - | | N,N-Bis-(2-hydroxy-ethyl)amin, | 100 | - | " | " |
| 1-8 | ($A_1$) | - | | " , | 55 | - | " | " |
| 1-9 | ($A_1$) | - | | N-Propyl-N-(2-hy-droxiethyl)amin, | 100 | - | " | " |
| 1-10 | ($A_1$) | - | | " , | 60 | - | " | " |
| 1-11 | ($A_1$) | - | | " , | 25 | - | " | " |
| 1-12 | ($A_1$) | - | | N-Butyl-N-(2-hy-droxiethyl)amin, | 96 | - | " | " |
| 1-13 | ($A_1$) | - | | N-Propyl-N-(5-hy-droxi-3-oxa-pen-tyl)amin, | 50 | - | " | " |
| 1-14 | ($A_3$) | Piperazin, | 97 | - | | - | " | " |
| 1-15 | ($A_3$) | - | | N-Propyl-N-(2-hy-droxiethyl)amin, | 100 | - | " | " |
| 1-16 | ($A_3$) | - | | " , | 30 | - | " | " |
| 1-17 | ($A_3$) | Piperazin, | 45 | " , | 55 | - | " | " |

Tabelle 1: Forts. Erfindungsgemäße Polymerisat-Ammoniumsalze

| Nr. | 100 g Copolymerisat | Amin (B) (b$_1$) Mol.-% | (b$_2$) Mol.-% | (b$_3$) Mol.-% | Polymerisat-Ammoniumsalz Trübung | Polymerisat-Ammoniumsalz Klebrigkeit |
|---|---|---|---|---|---|---|
| 1-18 | (A$_1$) | - | N-Methyl-N-(2-hydroxyethyl)amin, 80 | - | keine | keine |
| 1-19 | (A$_2$) | - | N-Phenyl-N-(2-hydroxyethyl)amin, 60 | - | " | " |
| 1-20 | (A$_3$) | - | N-Methyl-N-(2-hydroxypropyl)amin, 90 | - | " | " |
| 1-21 | (A$_1$) | - | N,N-Bis-(2-hydroxypropyl)amin, 85 | - | " | " |
| 1-22 | (A$_1$) | - | N-(2-Hydroxyethyl)-ethylendiamin, 50 | - | " | " |
| 1-23 | (A$_2$) | - | - | 1,4-Thiazin, 95 | " | " |
| 1-24 | (A$_1$) | - | - | N,N',N"-Trisvinylmelamin, 99 | " | " |
| 1-25 | (A$_3$) | N-(2-Hydroxyethyl)piperazin, 20 | N-Propyl-N-(2-hydroxyethyl)amin, 20 | 1,4-Thiazin, 40 | " | " |

Vergleichsversuch V1

Herstellung nicht erfindungsgemäßer Polymerisat-Ammoniumsalze

Es wurde wie in Beispiel 1 verfahren, nor daß anstelle der erfindungsgemäß anzuwendenden Amine ($b_1$), ($b_2$) und ($b_3$) andere Amine verwendet wurden.

Die Tabelle 2 gibt Auskunft über Art und Menge der verwendeten Ausgangsstoffe und über relevante Eigenschaften der erhaltenen, nicht erfindungsgemäßen Polymerisat-Ammoniumsalze.

Der Vergleich der Tabellen 1 und 2 zeigt, daß die bekannten Polymerisat-Ammoniumsalze den erfindungsgemäßen unterlegen waren. Überdies waren die bekannten Salze V1-1 bis V1-12 nicht völlig geruchsfrei.

Tabelle 2: Nicht erfindungsgemäße Polymerisat-Ammoniumsalze

| Nr. | 100 g Copolymerisat | Amin | Mol.-% | Polymerisat-Ammoniumsalz Trübung | Polymerisat-Ammoniumsalz Klebrigkeit |
|---|---|---|---|---|---|
| V1-1 | ($A_1$) | Ethylendiamin, | 50 | keine | gering |
| V1-2 | ($A_3$) | " , | 100 | stark | gering |
| V1-3 | ($A_1$) | Diethylentriamin, | 50 | keine | keine |
| V1-4 | ($A_3$) | N-Methyl-N-ethyl-ethylendiamin, | 95 | stark | keine |
| V1-5 | ($A_1$) | N-Dimethylethylendiamin, | 90 | keine | gering |
| V1-6 | ($A_3$) | N,N'-Diethylethylendiamin, | 87 | schwach | gering |
| V1-7 | ($A_1$) | N,N,N",N"-Tetramethylethylentriamin, | 94 | schwach | keine |
| V1-8 | ($A_3$) | 1,3-Diaminopropan, | 100 | schwach | gering |
| V1-9 | ($A_3$) | 1,4-Diaminobutan, | 96 | merklich | gering |
| V1-10 | ($A_3$) | Pyrazin, | 67 | keine | merklich |
| V1-11 | ($A_1$) | Pyrazin, | 50 | keine | merklich |
| V1-12 | ($A_1$) | Pyrazin, | 95 | gering | merklich |
| V1-13 | ($A_1$) | Polyvinylpyrrolidon, | 30 | stark | keine |
| V1-14 | ($A_1$ | Polyvinylpyrrolidon, | 50 | stark | keine |
| V1-15 | ($A_1$) | Polyvinylpyrrolidon, | 73 | sehr stark | keine |

Beispiel 2

Herstellung und Weiterverarbeitung von photopolymerisierbaren Gemischen auf der Grundlage der erfindungsgemäßen Polymerisat-Ammoniumsalze

Die photopolymerisierbaren Gemische auf der Grundlage der erfindungsgemäßen Polymerisat-Ammoniumsalze wurden durch Extrusion der Komponenten in einem Zweischneckenextruder hergestellt.

Die extrudierten Gemische wurden über eine Breitschlitzdüse auf 125 µm dicke Polyethylenterephthalatfolien ausgetragen und anschließend kalandriert, so daß 3 mm dicke Schichten aus den Gemischen resultierten. Danach wurden die Schichten mit 10 µm dicken Polyethylenterephthalatfolien abgedeckt.

Die Tabelle 3 gibt Auskunft über Art und Menge der verwendeten Komponenten.

Die in dieser Weise erhaltenen Mehrschichtenelemente wurden mit einem handelsüblichen Flachbelichter 20 Minuten lang vollflächig belichtet. Anschließend wurden die Polyethylenterephthalatfolien von den durch Photopolymerisation vernetzten Schichten 2-1 bis 2-6, tabelle 3, abgezogen.

Zur Messung der Reißdehnung wurden diese Schichten in 15 cm lange und 1,5 cm breite Streifen geschnitten.

Die Tabelle 3 gibt den mit jeweils 5 Streifen bestimmten Mittelwert der Reißdehnung der photopolymerisierten Schichten 2-1 bis 2-6 an.

Die Tabelle 3 zeigt, daß mit Hilfe der erfindungsgemäßen Polymerisat-Ammoniumsalze photopolymerisierte Schichten mit einer Reißdehnung von über 90 % in einfacher Weise hergestellt werden konnten.

Überdies zeigten weder die photopolymerisierbaren Gemische, noch die daraus hergestellten Mehrschichtenelemente oder die photopolymerisierten Schichten ein Ausschwitzen der Aminkomponente. Darüber hinaus waren die Schichten ozonstabil; innerhalb 10 Stunden traten keine Risse auf.

Vergleichsversuche V2 und V3

Herstellung und Weiterverarbeitung von photopolymerisierbaren Gemischen auf der Grundlage nicht erfindungsgemäßer Polymerisat-Ammoniumsalze

Es wurde wie in Beispiel 2 verfahren, nor daß anstelle der erfindungsgemäß anzuwendenden Amine (B) Ethylendiamin und Pyrazin verwendet wurden.

Die Tabelle 3 gibt Auskunft über Art und Menge der verwendeten Komponenten und über die Reißdehnung der photopolymerisierten Schichten.

Die Reißdehnung der Schichten V2 und V3 war niedriger als die der Schichten 2-1 bis 2-6 und erreichte nicht 90 % (vgl. Tabelle 3). Überdies neigten die Vergleichsgemische und die daraus hergestellten Mehrschichtenelemente und Schichten V2 und V3 zum Ausschwitzen der Aminkomponente.

Tabelle 3: Photopolymerisierbare Gemische auf der Grundlage der erfindungsgemäßen Polymerisat-Ammoniumsalze sowie die Vergleichsversuche V2 und V3

| Gemisch, Mehrschichtenelement und Schicht Nr. | Copolymerisat ($A_3$) Gew.-% | Hexandiol-diacrylat Gew.-% | Phenylethyl-methacrylat Gew.-% | Benzil-dimethyl-acetal Gew.-% | 2,6-Di-tert.-butyl-p-kresol Gew.-% | Weichmacher auf Sulfonamidbasis[a)] Gew.-% | Amin (B) Gew.-% | Reißdehnung nach DIN 53504 % |
|---|---|---|---|---|---|---|---|---|
| 2-1 | 63 | 4 | 3 | 1,5 | 0,5 | 19 | Piperazin, 9 | 580 |
| 2-2 | 63 | 4 | 3 | 1,5 | 0,5 | 23 | " , 5 | 190 |
| 2-3 | 63 | 4 | 3 | 1,5 | 0,5 | 15,5 | N-Ethyl-piperazin, 12,5 | 200 |
| 2-4 | 63 | 4 | 3 | 1,5 | 0,5 | 15,5 | N-(2-Hydroxy-ethyl)piperazin, 12,5 | 320 |
| 2-5 | 63 | 4 | 3 | 1,5 | 0,5 | 19 | Morpholin, 9 | 360 |
| 2-6 | 63 | 4 | 3 | 1,5 | 0,5 | 15,5 | N-Propyl-N-(2-hydroxiethyl)amin, 12,5 | 100 |
| Vergleichsversuche | | | | | | | | |
| $V_2$ | 63 | 4 | 3 | 1,5 | 0,5 | 17 | Ethylendiamin, 11 | 70 |
| $V_3$ | 63 | 4 | 3 | 1,5 | 0,5 | 12,8 | Pyrazin, 15,2 | 80 |

a) verwendet wurde ®Cetamoll BMB der BASF AG;

Beispiel 3

Herstellung von photopolymerisierbaren Gemischen auf der Grundlage der erfindungsgemäßen Polymerisat-Ammoniumsalze und ihre Verwendung zur Herstellung von photopolymerisierten Druckplatten.

Nach der in Beispiel 2 angegebenen Extrusionsmethode wurden Mehrschichtenelemente hergestellt. Hierbei wurden - im Unterschied zu beispiel 2 -anstelle der 125 µm dicken Polyethylenterephthalatfolien mit Haftlackschichten versehene, 0,3 m breite und 0,6 m lange Stahlbleche als Träger (T) verwendet.

Die so erhaltenen Mehrschichtenelemente wurden durch ein Standardnegativ hindurch mit aktinischem Licht während 90 Sekunden bildmäßig belichtet.

Nach dem Abziehen der 10 µm dicken Polyethylenterephthalatfolien von den belichteten Mehrschichtenelementen wurden diese in einem handelsüblichen Bürstenwascher unter Ausreiben mit Wasser bei 50 bis 60 °C entwickelt. Es resultierten photopolymerisierte Druckplatten, welche einen Träger (T), eine Haftschicht (HS) und eine Reliefschicht (RS′) aufwiesen.

Die Qualität der Reliefschichten (RS′) wurde visuell bestimmt und beurteilt, wobei die Wiedergabe feiner Bildelemente, die Planarität der druckenden Oberfläche, die Relieftiefe und der Flankenaufbau die Beurteilungskriterien waren. Für den Fall, daß alle Merkmale höchsten Qualitätsanforderungen genügten, wurde die Note "sehr gut", für den Fall, daß ein Merkmal nicht diese Anforderungen erfüllte, die Note "mäßig" und für den Fall, daß die Mehrzahl der Merkmale diesen Anforderungen nicht entsprach, die Note "unbrauchbar" erteilt.

Die Tabelle 4 gibt Auskunft über Art und Menge der verwendeten Komponenten und über die Qualität der Reliefschichten (RS′) der photopolymerisierten Druckplatten.

Die Tabelle 4 zeigt, daß alle Druckplatten 3-1 bis 3-5 hervorragende Reliefschichten (RS′) aufwiesen, welche den höchsten Ansprüchen genügten.

Die Druckplatten 3-1 und 3-5 wurden auf Druckzylinder aufgespannt und zum Drucken auf einem üblichen Flexodruckwerk verwendet. Dabei erwiesen sich die Druckplatten als sehr gut farbführend, beständig gegenüber Druckfarbenlösungsmitteln, abriebfest, nicht rupfend und rißbeständig. Dadurch konnten Auflagen von über $10^5$ Drucken erreicht werden, ohne daß die Wiedergabequalität in irgendeiner Weise gelitten hätte. Selbst nach mehrwöchiger Lagerung lieferten die Druckplatten noch immer die gleichen ausgezeichneten Druckergebnisse.

Vergleichsversuch V4 und V5

Herstellung von photopolymerisierbaren Gemischen auf der Grundlage nicht erfindungsgemäßer Polymerisat-Ammoniumsalze und ihre Verwendung zur herstellung von photopolymerisierten Druckplatten.

Nach der in Beispiel 3 angegebenen Methode wurden photopolymerisierte Druckplatten auf der Grundlage bekannter Gemische hergestellt.

Die Tabelle 4 gibt Auskunft über Art und Menge der verwendeten Komponenten und über die Qualität der Druckplattenreliefs.

Die Tabelle 4 zeigt, daß die auf der Grundlage nicht erfindungsgemäßer Polymerisat-Ammoniumsalze hergestellten Druckplatten von minderer Qualität waren. Überdies ergab die visuelle Beurteilung, daß bei der Entwicklung im Bürstenwascher Teile der stark angequollenen Reliefsschichten (RS′) herausgerissen worden waren. Es wurde deshalb auf Druckversuche verzichtet.

Tabelle 4: Druckplatten auf der Grundlage erfindungsgemäßer Polymerisat-Ammoniumsalze und die Vergleichsversuche V4 und V5

| Druckplatte Nr. | Photopolymerisierbares Gemisch der reliefbildenden Schicht | Qualität des Druckplattenreliefs | Beobachtungen |
|---|---|---|---|
| 3-1 | Gemisch 2-6, Beispiel 2, Tabelle 3, | sehr gut | |
| 3-2 | wie Gemisch 2-6, Beispiel 2, Tabelle 3, nur daß anstelle von 12,5 Gew.-% N-Propyl-N-(2-hydroxyethyl)amin, 16 Gew.-% N-Butyl-N-(2-hydroxyethyl)-amin und anstelle von 15,5 Gew.-% Weichmacher 12 Gew.-% verwendet wurden; | sehr gut | |
| 3-3 | wie Gemisch 2-6, Beispiel 2, Tabelle 3, nur daß anstelle von 12,5 Gew.-% N-Propyl-N-(2-hydroxyethyl)amin 12,5 Gew.-% N,N-Bis-(2-hydroxyethyl)amin verwendet wurden; | sehr gut | sehr kurze Auswaschzeiten (t < 1 Minute) |
| 3-4 | Gemisch 2-4, Beispiel 2, Tabelle 3; | sehr gut | |
| 3-5 | wie Gemisch 2-6, Beispiel 2, Tabelle 3, nur daß anstelle von 12,5 Gew.-% N-Propyl-N-(2-hydroxyethyl)amin eine Mischung aus 6 Gew.-% dieses Amins und 4 Gew.-% N-(2-Hydroxyethyl)piperazin sowie anstelle von 15,5 Gew.-% Weichmacher 18 Gew.-% verwendet wurden; | sehr gut | sehr kurze Auswaschzeiten (t < 1 Minute) |
| V4 | Gemisch $V_2$, Vergleichsversuch $V_2$, Tabelle 3; | mäßig | starke Quellung, herausgerissene Reliefteile |
| V5 | Gemisch $V_3$, Vergleichsversuch $V_3$, Tabelle 3; | unbrauchbar | starke Quellung, herausgerissene Reliefteile |

Beispiel 4

Herstellung eines photopolymerisierbaren Gemischs auf der Grundlage eines erfindungsgemäßen Polymerisat-Ammoniumsalzes und seine Verwendung zur Herstellung einer photopolymerisierten Druckplatte.

Das Gemisch wurde durch Extrusion von

74 Gew.-Teilen des Copolymerisats ($A_2$),
2,8 Gew.-Teilen Glycidylmethacrylat,
0,03 Gew.-Teilen Dimethylaminopyridin,
5 Gew.-Teilen Hexandioldiacrylat,
10 Gew.-Teilen eines Weichmachers auf Sulfonamid-Basis (verwendet wurde Cetamoll® BMB der BASF AKtiengesellschaft),
5 Gew.-Teilen N,N-Bis-(2-hydroxyethyl)amin,
2 Gew.-Teilen Benzildimethylacetal,
1,164 Gew.-Teilen 2,6-Di-tert.-butyl-p-kresol und
0,006 Gew.-Teilen Sudantiefschwarz BB (C.I. 26150)

auf einem Zweischneckenextruder bei 150 °C und bei einer Verweilzeit von 3 Minuten hergestellt. Das Gemisch wurde aus einer Breitschlitzdüse auf eine 125 µm dicke Polyethylenterephthalatfolie aufgetragen und mittels Kalanderwalzen auf eine Dicke von 3000 µm gebracht und mit einer 3 µm dicken Schicht aus Polyvinylalkohol bedeckt.

Das resultierende Mehrschichtenelement (Druckplatte) wurde während drei Minuten durch die Polyethylenterephthalatfolie hindurch vollflächig und danach während fünfzehn Minuten durch eine der Polyvinylalkoholschicht aufgelegten negativvorlage hindurch bildmäßig belichtet.

Nach dem Entfernen des Negativs wurde die Druckplatte mit Wasser bei 50 °C in einem Bürstenwascher entwickelt. Die so erhaltene photopolymerisierte Druckplatte wurde während dreißig Minuten bei 40 °C in einem Umlufttrockenschrank getrocknet.

Die Druckplatte wies eine sehr gut Reliefschicht (RS′) mit einer Relieftiefe von 900 µm auf. Die Reliefkanten und -flanken waren sehr gut ausgebildet; es ließen sich weder Unterwaschungen noch Kantenausbrüche erkennen. Die Reliefschicht (RS′) genügte höchsten Qualitätsanforderungen. Sie wurde daher mit "sehr gut" benotet.

Die Druckplatte wurde auf einen Druckzylinder aufgespannt und zum Drucken auf einem üblichen Flexodruckwerk verwendet. Dabei erwies sich die Druckplatte als überaus gut farbführend, beständig gegenüber Drückfarbenlösungsmitteln, abriebfest, nicht rupfend und rißbeständig, so daß ausgezeichnete Druckergebnisse in hoher Auflage erhalten wurden.

## Ansprüche

1. Polymerisat-Ammoniumsalze, welche von einem durch polymeranaloge Umsetzung modifizierbaren Copolymerisat (A) und von einem oder von mehreren Aminen (B) gebildet werden, wobei das Copolymerisat (A) durch Copolymerisation von Monomerengemischen erhältlich ist, die aus
$a_1$) Ethylen,
$a_2$) Acrylsäure und/oder Methacrylsäure und
$a_3$) einem oder mehreren weiteren Monomeren aus der Gruppe der Vinylester, Vinylether, Acrylsäureester, Methacrylsäureester, Acrylsäureamide und Methacrylsäureamide

bestehen, für deren Gewichtsverhältnisse die folgenden Bedingungen gelten:

Gew.-Teile ($a_1$) + ($a_2$) + ($a_3$) = 100,
30 Gew.-Teile $\leq$ Gew.-Teile ($a_1$) $\leq$ 70 Gew.-Teile,

5 Gew.-Teile ≦ Gew.-Teile ($a_2$) ≦ 50 Gew.-Teile
und
5 Gew.-Teile ≦ Gew.-Teile ($a_3$) ≦ 40 Gew.-Teile

dadurch gekennzeichnet, daß die Amine (B) aus der Gruppe der

$b_1$) cyclischen Aminen der allgemeinen Formel I

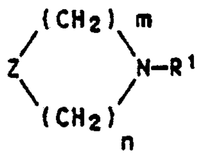 I,

worin
$R^1$ ein Wasserstoffatom, eine $C_1$- bis $C_6$-Alkylgruppe, eine $\omega$-Hydroxy-$C_1$- bis $C_6$-alkylgruppe oder eine $\omega$-Hydroxy-polyalkylenoxid-$\alpha$-yl-Gruppe,
Z eine Sauerstoff- oder Schwefelatom oder eine NH-Gruppe oder eine $C_1$- bis $C_5$-Alkylidengruppe
n eine ganze Zahl von 1 bis 4 und
m eine ganze Zahl von 1 bis 4
bedeuten,
und/oder aus der Gruppe der
$b_2$) offenkettigen Amine der allgemeinen Formel II

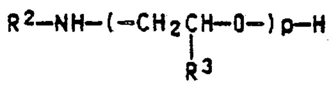 II,

worin
$R^2$ eine $C_1$- bis $C_5$-Alkylgruppe, eine Phenylgruppe, eine Hydroxy-, $\omega$-Amino- oder $\omega$-Thiolo-$C_2$- bis -$C_{10}$-Alkylgruppe oder eine $\omega$-Hydroxy-polyalkylenoxid-, $\omega$-amino-polyalkylenimin- oder $\omega$-Thiolo-polyalkylensulfid-$\alpha$-yl-Gruppe,
$R^3$ ein Wasserstoffatom oder eine $C_1$- bis $C_5$-Alkylgruppe und
p eine ganze Zahl von 1 bis 10
bedeuten,
und/oder aus der Gruppe
$b_3$) 1,4-Thiazin, N,N',N''-Trisvinylmelamin und N,N',N''-Trisallylmelamin

ausgewählt sind.

2. Polymerisat-Ammoniumsalze nach Anspruch 1, dadurch gekennzeichnet, daß für die Gewichtsverhältnisse der Monomeren ($a_1$), ($a_2$) und ($a_3$) die folgenden Bedingungen gelten:

Gew.-Teile ($a_1$) + ($a_2$) + ($a_3$) = 100,
40 Gew.-Teile ≦ Gew.-Teile ($a_1$) ≦ 60 Gew.-Teile,
8 Gew.-Teile ≦ Gew.-Teile ($a_2$) ≦ 30 Gew.-Teile und
20 Gew.-Teile ≦ Gew.-Teile ($a_3$) ≦ 40 Gew.-Teile.

3. Polymerisat-Ammoniumsalze nach einem der Ansprüche 1 oder 2, dadurch gekennzeichnet, daß das Copolymerisat (A)
C) hierin durch polymeranaloge Umsetzung eingeführte seitenständige Reste der allgemeinen Formel III enthält,

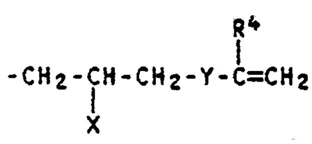 III,

worin

X eine Hydroxy-, eine Amino- oder eine Thiol-gruppe,

Y eine Ester-, eine Amid-, eine Ether- oder eine $C_1$- bis $C_{10}$-Alkandiyl-gruppe und

$R^4$ ein Wasserstoffatom oder eine Methylgruppe bedeuten.

4. Polymerisat-Ammoniumsalze nach einem der Ansprüche 1 bis 3, dadurch gekennzeichnet, daß das Copolymerisat (A)

D) hierin durch polymeranaloge Umsetzung eingeführte seitenständige Reste der allgemeinen Formel IV enthält,

$$-CH_2-\underset{\underset{X}{|}}{C}H-R^5 \qquad IV,$$

worin

$R^5$ eine polare Gruppe, ein Wasserstoffatom oder eine weitere Gruppe X bedeutet und X für eine Hydroxy-, eine Amino- oder eine Thiol-Gruppe steht.

5. Polymerisat-Ammoniumsalze nach einem der Ansprüche 1 bis 4, dadurch gekennzeichnet, daß das Amin ($b_1$) Piperazin, Morpholin, N-Ethylpiperazin und/oder N-(2-Hydroxyethyl)piperazin ist.

6. Polymerisat-Ammoniumsalz nach einem der Ansprüche 1 bis 4, dadurch gekennzeichnet, daß das Amin ($b_2$) N,N-Bis-(2-hydroxyethyl)amin, N-Methyl-N-(2-hydroxyethyl)amin, N-Propyl-N-(2-hydroxyethyl)-amin, N-Butyl-N-(2-hydroxyethyl)amin, N-Phenyl-N-(2-hydroxyethyl)amin, N-Methyl-N-(2-hydroxypropyl)-amin, N,N-Bis-(2-hydroxypropyl)amin, N-(2-Hydroxyethyl)ethylendiamin und/oder N-Propyl-N-(5-hydroxy-3-oxapentyl)amin ist.

7. Polymerisat-Ammoniumsalze nach einem der Ansprüche 1 bis 4, dadurch gekennzeichnet, daß das Amin ($b_3$) 1,4 Thiazin und/oder N,N′,N″-Trisvinylmelamin ist.

8. Polymerisat-Ammoniumsalze nach Anspruch 4, dadurch gekennzeichnet, daß sie durch polymeranaloge Umsetzung eingeführte seitenständige Reste (D) enthalten, in denen $R^5$ einen ω-Alkyl-poly-(ethylenoxid)-α-oxyl-Rest bedeutet.

9. Polymerisat-Ammoniumsalze nach einem der Ansprüche 1 bis 8, dadurch gekennzeichnet, daß Komponente ($a_3$) Vinylacetat ist.

10. Polymerisat-Ammoniumsalze nach einem der Ansprüche 1 bis 8, dadurch gekennzeichnet, daß Komponente ($a_3$) Vinyl-1-butylether ist.

11. Polymerisat-Ammoniumsalze nach einem der Ansprüche 1 bis 8, dadurch gekennzeichnet, daß Komponente ($a_3$) n-Butylacrylat, 2-Ethylhexylacrylat, Dicyclopentadienylacrylat und/oder ω-Methyl-poly-(ethylenoxid)-α-ylacrylat ist.

12. Photopolymerisierbare Gemische, enthaltend Polymerisat-Ammoniumsalze gemäß einem der Ansprüche 1 bis 11.